(19) Europäisches Patentamt / European Patent Office / Office européen des brevets

(11) **EP 4 589 486 A1**

(12) **EUROPEAN PATENT APPLICATION**

(43) Date of publication:
**23.07.2025** Bulletin 2025/30

(21) Application number: **24315015.8**

(22) Date of filing: **19.01.2024**

(51) International Patent Classification (IPC):
**G06N 10/40** (2022.01)      G06N 10/70 (2022.01)

(52) Cooperative Patent Classification (CPC):
**G06N 10/40;** G06N 10/70

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Quandela**
**91300 Massy (FR)**

(72) Inventors:
• **MEZHER, Rawad**
  **91120 Palaiseau (FR)**
• **Mills, James**
  **Edinburgh, EH12AY (GB)**

(74) Representative: **Yes My Patent**
  **32 Boulevard Richard Lenoir**
  **75011 Paris (FR)**

(54) **METHOD AND SYSTEM FOR MITIGATING THE EFFECTS OF PHOTON LOSS ON THE OUTPUT OF A LINEAR OPTICAL QUANTUM CIRCUIT**

(57)    The present invention relates to a method (100) for processing data related to lossy measured outputs to mitigate the effects of photon loss in at least one linear optical quantum circuit, said method being configured to be executed by at least one computer-implemented system.

Fig. 1

EP 4 589 486 A1

**Description**

Technical field

The present invention relates to the technical field of quantum computing. Particularly, the invention relates to the technical field of linear optical quantum computing.

Background of the invention

Linear optical quantum computing presents one of the most promising avenues for the development of large-scale quantum computers. Nevertheless, photons loss is one of the main issues in this kind of quantum computing system. Indeed, photon loss leads to a loss of information and therefore to errors. Moreover, the probability of photon loss scales exponentially with the quantum computing system size. Loss can occur as a result of many factors. Like, for example, as a result of inefficient photon generation and detection, or absorption during propagation through the linear optical quantum circuit.

In the prior art, there are two mains mathematical models to represent linear optical quantum computation: the KLM scheme (see for example the following publication: "Knill E, Laflamme R, Milburn GJ. A scheme for efficient quantum computation with linear optics. nature. 2001 Jan 4;409(6816):46-52. 13") and boson sampling (see for example the following publication: "Aaronson S, Arkhipov A. The computational complexity of linear optics. In Proceedings of the forty-third annual ACM symposium on Theory of computing 2011 Jun 6 (pp. 333-342).").

The KLM scheme is a universal model of quantum computation, however the overhead for implementing a two-qubit gate in the scheme is considerable. On the other hand, boson sampling is non-universal and is more straightforward to implement on current hardware than KLM. Boson sampling involves the interference of indistinguishable, non-interacting bosons in nonadaptive linear quantum optical circuits in order to generate distributions hard to sample from classically.

In the absence of quantum error correction (see for example the following publication: "Roffe J. Quantum error correction: an introductory guide. Contemporary Physics. 2019 Jul 3;60(3):226-45."), one major impediment to scaling up boson sampling common to all linear optical models of computation is photon loss.

Summary of the invention

According to one aspect, the present invention relates to a method for processing data related to lossy measured outputs to mitigate the effects of photon loss in at least one linear optical quantum circuit, said method being configured to be executed by at least one computer-implemented system, said method comprising at least:

    a. Running a predetermined number of times at least one experiment, said experiment comprising at least:

        i. Sending, preferably by at least one photon emitter module, at least one input string of n photons across at least one linear optical quantum circuit;

        ii. Measuring, preferably by at least one photon detector module, at least one output string of k photons at an output of said linear optical quantum circuit, the number n-k being equal to j, j being the number of lost photons across said linear optical quantum circuit, each number of lost photons being configured to be used to construct at least one theoretical output distribution composed of $\binom{m-k}{n-k}$ output states, wherein m is the number of mode, n is the number of input photons and k is the number of output photons;

        iii. Generating, preferably by at least one processing module, at least one probability distribution by constructing up to n-1 approximations of a theoretical output distribution based on said number of lost photons;

    b. Obtaining, preferably by at least said processing module, a plurality of probability distributions from said predetermined number of experiments;

    c. Fitting, preferably by at least said processing module, said plurality of probability distributions using at least a first mathematical model to generate at least one equation comprising at least one set of parameters;

    d. Extracting, preferably by at least said processing module, from said set of parameters at least one probability distribution, said probability distribution corresponding to an experiment wherein n is equal to k.

The present invention mitigates the effects of photon loss on the output of a linear optical quantum computer. It increases the accuracy of the output generated by a lossy photonic quantum computer, and so boosts its computational capabilities.

According to an embodiment, if there are n input photons, the present invention is configured to construct n-1 lossy approximations of the ideal output distribution. One for the n-1 photon outputs, one for the n-2 photon outputs, and so on. For n input photons, the present invention allows to construct n-1 such approximate distributions.

According to the present invention, for each output state a curve is fitted to the change in the probability with increasing number of lost photons. With a data point coming from each of the aforementioned lossy approximations of the ideal probability for that output state. And in this way the lossy approximate probabilities from the lossy distributions are used to extrapolate a mitigated probability for each output state, and thereby generate a mitigated output probability distribution. Advantageously, this technique also works for expectation values of marginals, that is outputs that relate to a subset of the possible output modes.

According to the prior art, postselection, where only non-lossy outputs are accepted, may be used to obtain the ideal output distribution of a lossy quantum circuit. This can be viewed as a basic form of quantum error mitigation, where the ideal distribution is accessible but with an exponentially scaling sampling cost. This is because the probability of postselection decreases exponentially with increasing system size causing the majority of samples to be rejected. The present invention proposes processing schemes that use information derived from lossy measured outputs to mitigate the effects of photon loss, thereby reducing the number of samples needed to perform a lossy computation to a given accuracy.

According to the prior art, the result of sampling from an n photon, m mode linear optical computation in the presence of loss is a distribution of output states with photon numbers in the range $0 \leq k \leq n$. The ideal output statistics may be obtained by postselecting on the n photon output states, this is however extremely costly. The present invention has been designed to reduce the effects of photon loss and in so doing to improve the convergence on the ideal distribution for a given number of samples. It also reduces the overall sampling cost to approximate the ideal distribution to a given precision.

The name given to techniques that use classical postprocessing to improve the accuracy of the output of a noisy quantum computation is quantum error mitigation (QEM). There are many difficulties with adapting traditional error mitigation techniques to the problem of photon loss. One is that they have generally been developed to mitigate types of noise fundamentally different to photon loss. In addition, the output of a linear optical circuit is generally an exponentially large distribution rather than an expectation value, and the majority of QEM techniques are designed to estimate ideal expectation values from noisy ones. Mitigating expectation values is sometimes referred to as weak mitigation, and mitigating distributions as strong mitigation. Also, the resource overhead of QEM is most commonly an increase in the sample complexity. The types of noise usually considered for QEM are usually those which introduce bias error to an expectation value, rather than photon loss which introduces error as a result of finite statistics. if the photon loss rate is high then too few samples are accepted for an accurate empirical representation of the ideal distribution. Postselection effectively converts photon loss into a finite sampling or statistical error, because the exponentially small probability of postselection with system size causes sample sparsity.

According to another aspect, the present invention relates to a computer product program for processing data related to lossy measured outputs to mitigate the effects of photon loss in at least one linear optical quantum circuit which, when executed by at least one computer-implemented system, executes the method according to the present invention.

According to another aspect, the present invention relates to a non-volatile memory comprising at least one computer program product according to the present invention.

According to another aspect, the present invention relates to a computer-implemented system for processing data related to lossy measured outputs to mitigate the effects of photon loss in at least one linear optical quantum circuit, said computer-implemented system comprising at least:

a. A photon emitter module comprising at least one single photon source configured to generate and send a plurality of strings of photons; Preferably a string of photon comprises a plurality of photons emitted one after another; Advantageously, each photon of a string of photons comprises a mode m;
b. Said linear optical quantum circuit configured to implement at least one unitary transformation on a given number of modes;
c. A photon detector module configured to measure at least one photon coming out from said linear optical quantum circuit;
d. A processing module comprising at least one processing unit configured to implement said method.

According to another aspect, the present invention relates to a computer program product for processing data related to lossy measured outputs to mitigate the effects of photon loss in at least one linear optical quantum circuit which, when executed by at least one computer-implemented system, executes the method according to the present invention.

According to another aspect, the present invention relates to a non-volatile memory comprising at least one computer program product according to the present invention.

Before providing below a detailed review of embodiments of the invention, some optional characteristics that may be used in association or alternatively will be listed hereinafter:

According to an example, the step of constructing up to n-1 approximations of a theoretical output distribution comprises at least:

a. Calculating, preferably by at least said processing module, from the experimental measurements the probability $p\left(s_i^{n-k}\right)$ of obtaining the bit string $s_i^{n-k}$ using the addition rule of probabilities as follow:

$$p\left(s_i^{n-k}\right) = \sum_{s_j^n \in \mathcal{G}\left(s_i^{n-k}\right)} p\left(s_j^n\right) \frac{1}{\binom{n}{k}}$$

where each element of the sum is composed of the probability $p\left(s_j^n\right)$ that the boson sampling outputs the ideal bit string $s_j^n$, multiplied by the probability $\frac{1}{\binom{n}{k}}$ of losing k photons from $s_j^n$ to end up with $s_i^{n-k}$

b. Constructing, preferably by at least said processing module, the probability distribution $p_{R,n-k}\left(s_l^n\right)$

$$p_{R,n-k}\left(s_l^n\right) := \sum_{s_i^{n-k} \in \mathcal{L}\left(s_l^n\right)} p\left(s_i^{n-k}\right) = p\left(s_l^n\right) + \sum_{s_i^{n-k} \in \mathcal{L}\left(s_l^n\right)} \sum_{s_j^n \in \mathcal{G}\left(s_i^{n-k}\right), j \neq l} p\left(s_j^n\right) \frac{1}{\binom{n}{k}}$$

c. Normalizing, preferably by at least said processing module, the probability distribution $p_R\left(s_l^n\right)$ using $\sum_i p\left(s_i^{n-k}\right) = 1$:

$$\sum_l p_{R,n-k}\left(s_l^n\right) = \sum_l \sum_{s_i^{n-k} \in \mathcal{L}\left(s_l^n\right)} p\left(s_i^{n-k}\right) = \binom{m-n+k}{k}$$

d. Obtaining, preferably by at least said processing module, the normalized probability $p_{R,n-k}\left(s_l^n\right)$:

$$p_{R,n-k}\left(s_l^n\right) = \frac{p\left(s_l^n\right)}{\binom{m-n+k}{k}} + \sum_{s_i^{n-k} \in \mathcal{L}\left(s_l^n\right)} \sum_{s_j^n \in \mathcal{G}\left(s_i^{n-k}\right), j \neq l} p\left(s_j^n\right) \frac{1}{\binom{m-n+k}{\binom{k}{k}}}$$

e. Extracting, preferably by at least said processing module, at least one interference term $I_{s_l^n, k}$ from said probability:

$$I_{s_l^n, k} = \sum_{s_i^{n-k} \in \mathcal{L}\left(s_l^n\right)} \sum_{s_j^n \in \mathcal{G}\left(s_i^{n-k}\right), j \neq l} p\left(s_j^n\right) \frac{1}{\binom{m-n+k}{\binom{k}{k}}}$$

Where, when k increases, said interference term $I_{s_l^n, k}$ approaches the uniform probability $p_{unif} := \frac{1}{\binom{m}{n}}$.

According to an example, said first mathematical model is a linear solving mathematical model configured to generate at least one equation comprising at least said set of parameters, and to extract from said set of parameters at least one probability distribution.

According to an example, said inference term $I_{s_l^n, k}$ is replaced by its average over all possible linear optical circuits such as:

$$I_{s_l^n,k} = \frac{N_k'}{N_k}\frac{1}{\binom{m}{n}}$$

where $N_k := \binom{m-n+k}{k}\binom{n}{k}$ and $N_k' := N_k - \binom{n}{k}$

According to an example, the normalized probability $p_{R,n-k}(s_l^n)$ is computed from the experimental statistics of n-k photons to obtain said ideal probability from the following:

$$p(s_l^n) = \left| \binom{m-n+k}{k} \left( p_{R,n-k}(s_l^n) - \frac{N_k'}{N_k}\frac{1}{\binom{m}{n}} \right) \right|$$

According to an example, a dependency term $d_k$ is added to the interference term, said dependency term is configured to qualify the average correlation of the inference terms with their respective ideal probabilities within a probability distribution, and said dependency term is as follow:

$$d_k = \frac{1}{\binom{m-n+k}{k}-1} \left( \frac{\binom{m-n+k}{k}D_k}{D_0} - \frac{1}{\binom{m-n+k}{k}} \right)$$

And, the interference term is as follow:

$$I_{s_l^n,k} = \frac{N_k'}{N_k}\left( (1-d_k)p_{\text{unif}} + d_k p(s_l^n) \right)$$

Where $p_{unif}$ is the uniform probability such as $p_{\text{unif}} = \frac{1}{\binom{m}{n}}$, and $d_k$ is the dependency term, k is the number of lost photons for the output, $N_k := \binom{m-n+k}{k}\binom{n}{k}$, and $N_k' := N_k - \binom{n}{k}$.

According to an example, said first mathematical model is a curve fitting model configured to generate at least one equation comprising at least said set of parameters, and to extract from said set of parameters at least one probability distribution.

According to an example, said curve fitting model is a linear curve fitting model using the following linear model function:

$$f_{p_{R,n-k}(s_l^n,k)} := g_{avg}k + \alpha_{s_l^n,n}$$

Wherein $f_{p_{R,n-k}(s_l^n,k)}$ refers to the linear model function, $g_{avg}$ is the gradient parameter, k is the number of lost photons for the output, and $\alpha_{s_l^n,n}$ is a numerical value associated with the model function.

According to an example, said curve fitting model is an exponential curve fitting model using the following exponential model function:

$$f_{p_{R,n-k}(s_l^n,k)} := \alpha_{s_l^n,n}e^{-g_{avg}k} + p_{unif}$$

Wherein $p_{unif}$ is the uniform probability such as $p_{\text{unif}} = \frac{1}{\binom{m}{n}}$, and $f_{p_{R,n-k}(s_l^n,k)}$ refers to the exponential model function, $g_{avg}$ is the gradient parameter, k is the number of lost photons for the output, and $\alpha_{s_l^n,n}$ is a numerical value associated with the model function.

According to an example, at least one photon of the string of photons is measured using at least one number resolving detector of the photon detector module.

According to an example, at least one photon of the string of photons is measured using at least one threshold detector of the photon detector module.

According to an example, said linear optical quantum circuit comprises at least:

a. One input configured to receive at least one string of photons, preferably from said photon emitter module;
b. Linear optical circuits elements configured to implement at least one unitary transformation on a given number of modes on at least one photon of said string of photons;
c. One output configured to collaborate with at least said photon detector module to measure at least one photon coming out.

Brief description of the drawings

The aims, objects, as well as technical features, and advantages of the invention, will emerge better from the detailed description of an embodiment of the invention which is illustrated by the following figures in which:

- Figure 1 is a schematic view of a method according to an embodiment of the present invention.
- Figure 2 is schematic graph illustrating one of the principles of the present invention according to an embodiment.
- Figure 3 is graph illustrating relative performances of various embodiments of the present invention.
- Figure 4 is a schematic view of a computer-implemented system according to an embodiment of the present invention.

The drawings are given by way of example and do not limit the invention. They constitute representations of principles intended to facilitate understanding of the invention and are not necessarily on the scale of practical applications.

Detailed description

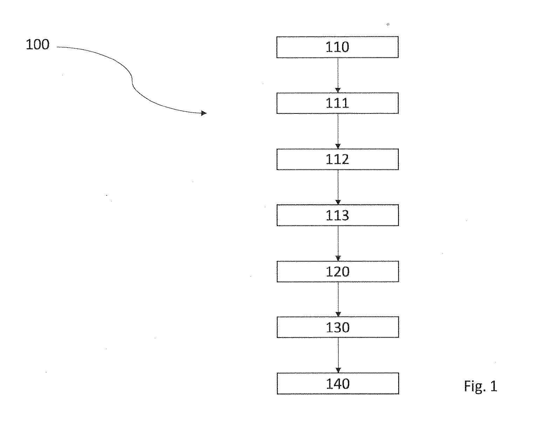

The present disclosure is here described in detail with reference to non-limiting embodiments illustrated in the drawings.
According to an embodiment, the present invention relates to a method for processing data. These data are related to lossy measured outputs from at least one linear optical quantum circuit. The present invention is advantageously configured to mitigate the effects of photon loss in at least said linear optical quantum circuit. Preferably, the present invention relates to a method for processing data schemes that use information derived from lossy measured outputs from at least one linear optical quantum circuit. The present invention allows to reduce the number of samples needed to perform a lossy computation to a given accuracy.
As described hereafter, the present invention is configured to be executed by at least one computer-implemented system.
According to an embodiment, and as illustrated by figure 1, said method 100 comprises at least:

a. Running 110 a predetermined number of times at least one experiment, preferably using at least one linear optical quantum circuit;
b. Obtaining 120 a plurality of probability distributions from said predetermined number of experiments, preferably using a processing unit;
c. Fitting 130 said plurality of probability distributions using at least a first mathematical model to generate at least one equation comprising at least one set of parameters, preferably using said processing unit;
d. Extracting 140 from said set of parameters at least one probability distribution, also called photon loss mitigated probability distribution, preferably using said processing unit.

According to an embodiment and as illustrated in Figure 1, the method 100 comprises several steps that are designed to mitigate photon loss.
According to an embodiment, the method 100 comprises running 110 at least one experiment a predetermined number of times. Said experiment is configured to use at least one linear optical quantum circuit. This step is configured to enable the collection of data that can be used to analyze and mitigate photon loss.
According to an embodiment, the method 100 involves obtaining 120 a plurality of probability distributions from the predetermined number of experiments. This can be achieved using a processing unit that is designed to process the collected data and extract relevant information. For example, by analyzing these probability distributions, it is possible to identify patterns and trends that can provide insights into the underlying physics of photon loss in said linear optical quantum circuit.
According to an embodiment the method 100 also involves fitting 130 the plurality of probability distributions using at least a first mathematical model. This step preferably involves using a processing unit to analyze the collected data and generate equations that describe the behavior of photons in the system. By fitting the probability distributions to these equations, it is possible to determine at least one set of parameters that govern the behavior of photons in said linear optical quantum circuit.

According to an embodiment, the method 100 involves extracting 140 from the set of parameters at least one probability distribution, also called a photon loss mitigated probability distribution. This step preferably involves using a processing unit to analyze the equations generated in the previous step and determine the probability distribution that is most likely to represent the behavior of photons in the linear optical quantum circuit. By doing so, it is possible to mitigate photon loss and improve the overall performance of quantum systems. Overall, the method 100 provides a comprehensive approach to mitigating photon loss in quantum systems and can be used to improve the reliability and efficiency of such systems.

According to an embodiment, said experiment comprises at least:

i. Sending 111 at least one input string of n photons across at least one linear optical quantum circuit, preferably using at least one input of said linear optical quantum circuit;
ii. Measuring 112, preferably using at least one photon detector module of said linear optical quantum circuit, at least one output string of k photons at an output of said linear optical quantum circuit, the number n-k being equal to j, j being the number of lost photons across said linear optical quantum circuit, each number of lost photons being configured to be used to construct at least one theoretical output distribution composed of $\binom{m-k}{n-k}$ output states, preferably each lost photon being characterized by a theoretical output state $\binom{m-k}{n-k}$ wherein m is the number of mode, n is the number of input photons and k is the number of output photons;
iii. Generating 113 at least one probability distribution by constructing up to n-1 approximations of a theoretical output distribution based on said number j, i.e. said number of lost photons, preferably using said processing unit;

According to an embodiment, said probability distribution corresponds to an experiment wherein n is equal to k, i.e. wherein n photons are measured, i.e. wherein no photon is lost during said experiment.

According to an embodiment, the method comprises sending 111 at least one input string of n photons across the linear optical quantum circuit, preferably, with n being a positive integer greater than or equal to 1. Advantageously, this is achieved using at least one input of said linear optical quantum circuit.

According to an embodiment, the method involves measuring 112 at least one output string of k photons at an output of the linear optical quantum circuit. Here, k is a positive integer greater than or equal to 0, and n-k is equal to j, where j represents the number of lost photons across the circuit. It is important to note that each lost photon has a theoretical output state, which can be characterized as follow: $\binom{m-k}{n-k}$. In this context, m refers to the number of modes, n represents the number of input photons, and k denotes the number of output photons.

According to an embodiment, the method entails generating 113 at least one probability distribution by constructing up to n-1 approximations of a theoretical output distribution based on the number j. Preferably, this is done using a processing unit. The generated probability distribution can be used for various purposes in quantum computing and communication, as described hereafter.

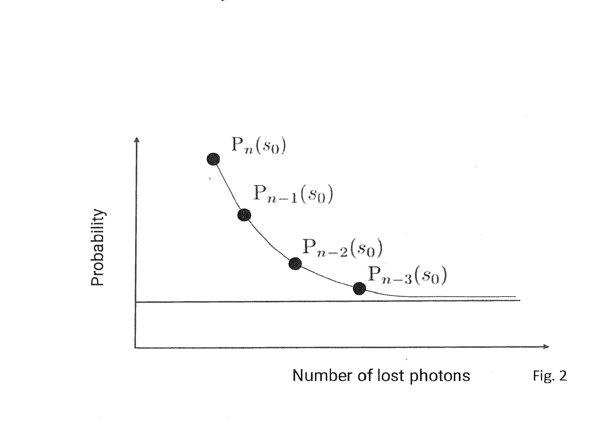

According to an embodiment, and as illustrated by figure 2, the present invention use a plurality of probability distributions to determine said photon loss mitigated probability distribution. Figure 2 illustrates the average behaviour of lossy approximated probabilities to converge towards a fixed value with increasing k. The value that the probabilities are converging to is the uniform probability $p_{unif} = \binom{m}{n}^{-1}$.

According to an embodiment, n is the number of input photons into a m-mode linear optical quantum circuit $U \in U(m)$, $U(m)$ is the group of unitary $m \times m$ matrices. Let assume a regime where $m \gg n^2$, this guarantees that all outputs are no-collision outputs, and $n \times n$ submatrices of U are close to being independent identically distribution (IID) Gaussian matrices, see for example the following publication: "Aaronson S, Arkhipov A. The computational complexity of linear optics. InProceedings of the forty-third annual ACM symposium on Theory of computing 2011 Jun 6 (pp. 333-342)".

According to an embodiment, let $s_i^{n-k}$ be a bit string of the form $\{s_1, \dots, s_m\}$ where $\Sigma_l s_l = n - k$, $s_i \in \{0,1\}$ is the number of photons in mode i, and $k \in \{0, \dots, n\}$. For example, this bit string corresponds to a sampling, preferably to a Boson sampling, where k photons are lost. It must be noticed that in particle physics, a boson is a subatomic particle whose spin quantum number has an integer value (0, 1, 2, ...) such as a photon, for example.

According to an embodiment, there are $\binom{m}{n-k}$ such bit strings corresponding to all possible outputs of a Boson sampling circuit with k lost photons. Let $\mathcal{M}_{unocc,k,i}$ be the subset of {1, m} corresponding to the unoccupied modes of $s_i^{n-k}$, that is, for the $i^{th}$ output string of $n$ - $k$ photons the modes j with $s_j = 0$. Note that $|\mathcal{M}_{unocc,k,i}| = m - n + k$, meaning there are $m - n + k$ unoccupied modes. Furthermore Let $\overline{\mathcal{M}_{unocc,k,i}}$ be the complement of $\mathcal{M}_{unocc,k,i}$ in {1, ..., m}, this is the set of occupied modes, and note that $\overline{\mathcal{M}_{unocc,k,i}} \cup \mathcal{M}_{unocc,k,i} = \{1, ..., m\}$, The uniform loss model can be used and wherein a photon has a probability $\eta \in [0,1]$ to be lost at any given mode. In the following, the hypothesis of photons being lost at the output of a boson sampler, just before detection, can be used, see for example the following publication: "Oszmaniec M, Brod DJ. Classical simulation of photonic linear optics with lost particles. New Journal of Physics. 2018 Sep 19;20(9):092002".

According to an embodiment, one performs $N_{tot}$ runs of Boson sampling. The uniform loss model induces a binomial distribution, in the sense that one will observe $\approx \binom{n}{k} N_{tot} \eta^k (1 - \eta)^{n-k}$ output samples corresponding to k lost photons, for k $\in$ {0, ...,n}.

According to an embodiment, let define $\mathcal{G}\left(s_i^{n-k}\right) := \{s_j^n \mid s_i^{n-k} \to s_j^n\}$, where the transformation -> corresponds to adding k photons, one per each mode, to a specific subset of size k chosen from $\mathcal{M}_{unocc,k,i}$. Note that, $\left|\mathcal{G}\left(s_i^{n-k}\right)\right| = \binom{m-n+k}{k}$, corresponding to the number of subsets of size k of $\mathcal{M}_{unocc,k,i}$. Lastly, let define $\mathcal{L}(s_i^n) := \{s_j^{n-k} \mid s_i^n \Rightarrow s_j^{n-k}\}$, where the transformation $\Rightarrow$ corresponds to removing k photons from $s_i^n$ as follows.

First, choose a subset of size k from the $\overline{\mathcal{M}_{unocc,0,i}}$, then replace each $s_l = 1$ in this subset by $s_l = 0$. It can be seen that $|\mathcal{L}(s_i^n)| = \binom{n}{k}$ corresponding to the number of subsets of size k of $\overline{\mathcal{M}_{unocc,0,i}}$.

According to an embodiment, the starting point can be the probability $p\left(s_i^{n-k}\right)$ of obtaining the bit string $s_i^{n-k}$. From the addition rule of probabilities:

$$p\left(s_i^{n-k}\right) = \sum_{s_j^n \in \mathcal{G}(s_i^{n-k})} p\left(s_j^n\right) \frac{1}{\binom{n}{k}}$$

where each element of the sum is composed of the probability $p\left(s_j^n\right)$ also called the mitigated probability which by extension leads to the ideal probability. Indeed, the mitigated distribution is the output of the mitigation technique, it is an approximation of the ideal distribution, and the better the mitigation technique, the better this approximation. Please note that in the description the ideal probability / distribution can also be referred as an n photon probability/distribution. In the previous equation, the boson sampling outputs an n photon output bit string $s_j^n$ is multiplied by the probability $\frac{1}{\binom{n}{k}}$ of losing k photons from $s_j^n$ to end up with $s_i^{n-k}$. For some arbitrary labelling of bit strings $s_j^n$, suppose the bit string $s_l^n \in \mathcal{G}\left(s_i^{n-k}\right)$, one can rewrite the above probability as follow:

$$p\left(s_i^{n-k}\right) = p(s_l^n) \frac{1}{\binom{n}{k}} + \sum_{s_j^n \in \mathcal{G}(s_i^{n-k}), j \neq l} p\left(s_j^n\right) \frac{1}{\binom{n}{k}}$$

Advantageously, the present invention allows to amplify at least one signal of the probability $p\left(s_l^n\right)$, allowing to estimate this probability more reliably. Preferably, to amplify said signal, the present invention is configured to construct said probability distribution. Therefore, using the present invention, one can define:

$$p_{R,n-k}(s_l^n) := \sum_{s_i^{n-k} \in \mathcal{L}(s_l^n)} p(s_i^{n-k}) = p(s_l^n) + \sum_{s_i^{n-k} \in \mathcal{L}(s_l^n)} \sum_{s_j^n \in \mathcal{G}(s_i^{n-k}), j \neq l} p(s_j^n) \frac{1}{\binom{n}{k}}$$

Note that the probability $p_R(s_l^n)$ has an amplified signal for $p(s_l^n)$. One step then can be to normalize the distribution $p_R(s_l^n)$, namely compute N such that $N \sum_l p_{R,n-k}(s_l^n) = 1$. To do this, note that:

$$\sum_l p_{R,n-k}(s_l^n) = \sum_l \sum_{s_i^{n-k} \in \mathcal{L}(s_l^n)} p(s_i^{n-k}) = \binom{m-n+k}{k}$$

this is because $\sum_i p(s_i^{n-k}) = 1$, and each distinct $s_i^{n-k}$ appears exactly $\binom{m-n+k}{k}$ in the above sum.

Thus, $N = \frac{1}{\binom{m-n+k}{k}}$, and therefore the normalized probability is given by:

$$p_{R,n-k}(s_l^n) = \frac{p(s_l^n)}{\binom{m-n+k}{k}} + \sum_{s_i^{n-k} \in \mathcal{L}(s_l^n)} \sum_{s_j^n \in \mathcal{G}(s_i^{n-k}), j \neq l} p(s_j^n) \frac{1}{\binom{m-n+k}{\binom{n}{k}}}$$

The interference term associated with the k photon statistics recycled probability $p_{R,n-k}(s_l^n)$ is defined to be the sum: $\sum_{s_i^{n-k} \in \mathcal{L}(s_l^n)} \sum_{s_j^n \in \mathcal{G}(s_i^{n-k}), j \neq l} p(s_j^n) \frac{1}{\binom{m-n+k}{\binom{n}{k}}}$, and can be denoted $I_{s_l^n,k}$. And so the previous expression can be written as follow:

$$p_{R,n-k}(s_l^n) = \frac{p(s_l^n)}{\binom{m-n+k}{k}} + I_{s_l^n,k}$$

According to an embodiment, as k increases, the interference term approaches the uniform probability $p_{unif} := \frac{1}{\binom{m}{n}}$. As more photons are lost the lossy probability distributions should decay towards the uniform distribution. This can be seen from the number of different probabilities from the n photon distribution included in the interference terms.

According to an embodiment, the present invention can be implemented using different techniques for mitigating photon loss using $p_{R,n-k}(s_l^n)$. These techniques can be for example:

    a. linear solving, and
    b. linear curve fitting, and
    c. exponential curve fitting.

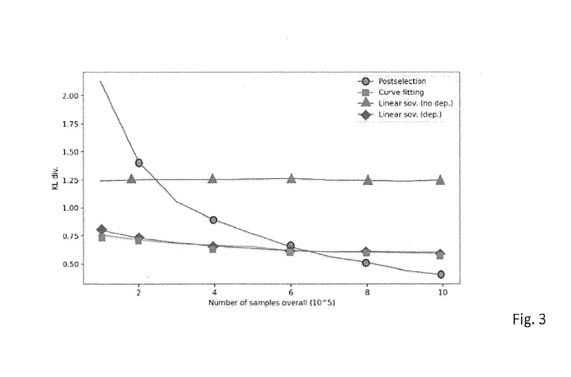

Indeed, the present invention is made to be able to use different types of curve fitting. Figure 3 illustrates relative performances, all of them outperform post-selecting on n photon statistics (i.e waiting to detect all photons) up to large sample sizes, which is one the main benchmark used here.

Indeed, according to an embodiment, the first mathematical model can be selected among at least:

    a. A linear solving mathematical model configured to generate said at least one equation comprising said at least set of parameters, and to extract from said set of parameters at least one probability distribution;
    b. A curve fitting mathematical model, said curve fitting mathematical model can be an extrapolation mathematical model taken among a linear extrapolation mathematical model, a polynomial extrapolation mathematical model or an exponential extrapolation mathematical model.

According to an embodiment, using linear solving mathematical model, first one fixes the value of the loss k, i.e.

the number of lost photons, and looks only at the statistics where one detected n-k photons.

According to an embodiment, one then replaces the interference term by its average over all possible linear optical circuits, see for example the following publication: "Nezami S. Permanent of random matrices from representation theory: moments, numerics, concentration, and comments on hardness of boson-sampling. arXiv preprint ar-Xiv:2104.06423. 2021 Apr 13", that is one makes the replacement:

$$I_{s_l^n,k} = \frac{N_k'}{N_k} \frac{1}{\binom{m}{n}}$$

where $N_k := \binom{m-n+k}{k}\binom{n}{k}$ and $N_k' := N_k - \binom{n}{k}$

According to an embodiment, one can compute $p_{R,n-k}(s_l^n)$ from the experimental statistics of n-k photons, therefore, one can deduce the so-called ideal probability from the following formula:

$$p(s_l^n) = \left| \binom{m-n+k}{k} \left( p_{R,n-k}(s_l^n) - \frac{N_k'}{N_k} \frac{1}{\binom{m}{n}} \right) \right|$$

It has to be noted that there are two main sources of imprecision, the first can be the bias error $\varepsilon_{bias}$, coming from replacing $I_{s_l^n,k}$ by its average overall linear optical circuits. The second error can be the finite statistics error $\varepsilon_{f,k}$ error coming from computing $p_{R,n-k}(s_l^n)$ using a finite number of samples, see for example the following publication: "Hoeffding W. The collected works of Wassily Hoeffding. Springer Science and Business Media; 2012 Dec 6", and is unavoidable for any realistic experiment. It has to be noted that $\varepsilon_{f,k}$ improves, i.e. gets lower, by increasing the number of samples used.

According to an embodiment, for post-selection, the only source of error is the finite statistics error $\varepsilon_{f,0}$ coming from using the samples corresponding to instances where all photons have been detected.

Using well-known methods by the skilled person in the art, one can show analytically that:

$$\epsilon_{f,k} + \epsilon_{bias} \leq \epsilon_{f,0}$$

The above inequality means that the method of the present invention outperforms the post-selection approach in the high loss regime. The above inequality holds for up to large values of $N_{tot}$ but there is a point after which post-selection outperforms this approach, this is because $\varepsilon_{f,0}$ keeps getting better with increasing $N_{tot}$, but $\varepsilon_{bias}$ does not. Nevertheless, the sample sizes for which post-selection starts to outperform the present method are very large, and therefore not feasible to reach in practice.

According to an embodiment, one can extract better performance out of the present invention by using more information available from the experimental statistics. According to an embodiment, one way to do this is by adding a dependency term $d_k$. It quantifies the average correlation of the interference terms with their respective ideal probabilities within a probability distribution. When $d_k > 0$, this means there is a stronger signal for the ideal probability than if there were no dependency. This can be exploited to improve the performance of linear solving.

According to an embodiment, this dependency term depends on k, and can be computed from the experimental statistics as follows:

$$d_k = \frac{1}{\binom{m-n+k}{k} - 1} \left( \frac{\binom{m-n+k}{k} D_k}{D_0} - \frac{1}{\binom{m-n+k}{k}} \right)$$

The way $d_k$ can be used according to an embodiment is as follows: In linear solving, instead of replacing the interference term with $p_{unif}$, one can make the following replacement:

$$I_{s_l^n,k} = \frac{N_k'}{N_k} \left( (1 - d_k) p_{unif} + d_k p(s_l^n) \right)$$

It has to be noticed that this dependence of the interference terms upon the ideal probabilities means that rather than the signal of the ideal probability having magnitude $\frac{1}{\binom{m-n+k}{k}}$, its magnitude is instead $\frac{1}{\binom{m-n+k}{k}} + \frac{N'_k}{N_k} d_k$. This means that correlation between the interference terms and the ideal probabilities strengthens the signal of the ideal probability in the lossy approximate distributions. Figure 2 illustrates that this significantly improves the performance of linear solving.

According to another embodiment, curve fitting mathematical models can be used. Indeed, the magnitude of the signal of the ideal probability within the probability is $\frac{1}{\binom{m-n+k}{k}}$. This is the same for all the probabilities in the probability distribution $p_{R,n-k}$. As k increases the magnitude of the ideal probability for the n-k photon probability distribution decreases approximately as $\frac{1}{\binom{m-n+k}{k}} \approx m^{-k}$. Extrapolation or fitting techniques can be used to calculate this rate of decay and then extrapolate back to find the mitigated probabilities.

It has to be noticed that as the decay of the ideal signal is the same for all probabilities, although the interference terms will deviate around some expected value, this means there is a global decay behaviour.

According to an embodiment, one can calculate this decay using the full distribution, or some large subset of probabilities of the distribution, thus decreasing its statistical error relative to individual probabilities. Then an average decay parameter can be used in extrapolation for each probability in order to generate the distribution. Different types of curve fitting can be performed depending on the model function used to fit to the data.

According to'an embodiment, one can use linear curve fitting and exponential curve fitting. These relate to using a linear model function and an exponential model function for the fitting respectively.

According to an embodiment using a linear curve fitting technic, one will look at the average distance from $p_{unif} = \frac{1}{\binom{m}{n}}$ of the probabilities $p_{R,n-k}(s_l^n)$. The average distance D, for a given k, is defined as

$$D_{n-k} := \frac{1}{\binom{m}{n}} \sum_{s_l^n} |p_{R,n-k}(s_l^n) - p_{unif}|$$

Preferably, one can compute $D_{n-k}$ using various values of k, unlike linear solving where one uses only one value of k.

According to an embodiment, in the linear fitting method, one fits the computed data $D_{n-k}$ to a linear model function as follow:

$$f_{D_k} := g_{avg} k + D_n$$

Advantageously, one can compute $g_{avg}$ from the data points $D_k$ using least squares fitting technique, see for example the following publication: "Hansen PC, Pereyra V, Scherer G. Least squares data fitting with applications. JHU Press; 2013 Jan 15". Then, one can use the computed value of $g_{avg}$ to fit the individual probabilities, also using a linear function of the form of:

$$f_{p_{R,n-k}(s_l^n,k)} := g_{avg} k + \alpha_{s_l^n,n}$$

Where one has denoted $p_R(s_l^n, k)$ to be the probability computed from the n-k photon statistics.

The $\alpha_{s_l^n,n}$ are the mitigated probability distributions one aims to compute. Again, in order to compute these one can use least squares with the above model functions and with data points $\{p_{R,n-k}(s_l^n), k\}_k$ for each $s_l^n$ which one can compute experimentally from n-k photon statistics for the different values of k.

Advantageously, as in the linear solving, one can show analytically using well-known methods that the computed mitigated probabilities $\{\alpha_{s_l^n,n}\}$ are more converged towards the ideal probabilities than their post-selected counterparts, up to a certain sample size. Thus, linear fitting also outperforms post-selection for up to large sample sizes.

According to an embodiment using exponential fitting, one can perform the exact same steps as in the linear fitting, however using the following two exponential model functions:

$$f_{D_k} := D_n e^{-g_{avg}k}$$

and

$$f_{p_{R,n-k}(s_l^n,k)} := \alpha_{s_l^n,n} e^{-g_{avg}k} + p_{unif}$$

As in the linear fitting, one can show analytically using well-known methods that the computed mitigated probabilities $\{\alpha_{s_l^n,n}\}$ are more converged towards the ideal probabilities than there post-selected counterparts, up to a certain sample size. Thus, exponential fitting also outperforms post-selection for up to large sample sizes.

According to an embodiment, the present invention relates to a computer-implemented system.

Preferably, said computer-implemented system is configured to process data related to lossy measured outputs to mitigate the effects of photon loss in at least one linear optical quantum circuit. Advantageously, said computer-implemented system is configured to execute the method according to the present invention.

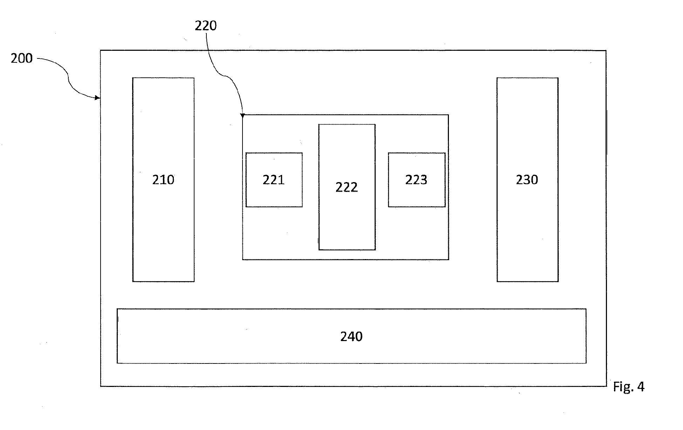

According to an embodiment, and as illustrated by figure 4, said computer-implemented system 200 can comprise at least:

   a. A photon emitter module 210 comprising at least one single photon source configured to generate and send a plurality of strings of photons; Preferably a string of photon comprises a plurality of photons emitted one after another; Advantageously, each photon of a string of photons comprises a mode m;
   b. A linear optical quantum circuit 220 configured to implement at least one unitary transformation on a given number of modes;
   c. A photon detector module 230 configured to measure at least one photon coming out from said linear optical quantum circuit;
   d. A processing module 240 comprising at least one processing unit configured to implement said method.

According to an embodiment, as illustrated in Figure 4, the computer-implemented system 200 can comprise several components that work together to achieve the desired functionality.

According to an embodiment, it can include a photon emitter module 210 that is designed to generate and send a plurality of strings of photons. Each string of photons typically comprises multiple photons that are emitted one after another, with each photon representing a distinct mode m. The photon emitter module 210 can be configured to emit photons in a controlled manner, thus enabling the generation of specific photonic modes as required by the invention and/or the user.

According to an embodiment, the computer-implemented system 200 includes a linear optical quantum circuit 220 that is designed to implement at least one unitary transformation on a given number of modes. This quantum circuit 220 can be configured to perform various operations on the photonic modes. It typically comprises several optical elements that interact with the photons in a controlled manner, thus enabling the implementation of complex transformations.

According to an embodiment, the computer-implemented system 200 can also include a photon detector module 230 that is designed to measure at least one photon coming out from the linear optical quantum circuit 220. This photon detector module 230 can be configured to detect and analyze various properties of the emitted photons, such as their polarization or phase, for example. By measuring these properties, it is possible to determine whether the desired unitary transformations have been successfully implemented.

According to an embodiment, the computer-implemented system 200 includes a processing module 240 that comprises at least one processing unit configured to implement the method previously described. This processing module 240 can be responsible for coordinating the various components of the system 200 and executing the necessary computations to achieve the desired functionality. It can also be used to store and manipulate data related to the photonic modes and their properties, thus enabling a wide range of applications in quantum computing and communication.

According to an embodiment, said linear optical quantum circuit 220 comprises at least:

   a. One input 221 configured to receive at least one string of photons, preferably from said photon emitter module;
   b. Linear optical circuits elements 222 configured to implement at least one unitary transformation on a given number of modes on at least one photon of said string of photons;
   c. One output 223 configured to collaborate with at least said photon detector module to measure at least one photon coming out.

According to an embodiment, the linear optical quantum circuit 220 is designed to implement a series of unitary transformations on a given number of modes in a string of photons. To achieve this, the circuit can comprise several components.

According to an embodiment, it can include at least one input 221 that is configured to receive at least one string of photons. This input 221 is preferably connected to at least one photon emitter module 210, which generates and emits a predetermined number of photons.

According to an embodiment, said linear optical quantum circuit 220 can also feature several linear optical circuits elements 222 that are designed to implement the unitary transformations on the photons. These elements can manipulate the properties of light, such as its polarization or phase, to achieve predetermined transformations.

According to an embodiment, at least one output 223 of the linear optical quantum circuit 220 is configured to collaborate with at least one photon detector module 230 to measure at least one photon coming out. The output 223 can be connected to various detectors to measure and analyze the properties of the emitted photons.

Therefore, the linear optical quantum circuit 220 enables the implementation of complex unitary transformations on photon strings.

According to an embodiment, the present invention is configured to mitigate the effects of photon loss in linear optical quantum circuits. All the outputs, both the lossy and non-lossy measured outputs, are collected during sampling from a linear optical circuit. Where sampling denotes repeatedly running the computation and measuring the output. And a lossy output is one where, if there are n input photons, fewer than n photons are measured at the output. Photon loss will cause a distribution of different numbers of photons to be measured at the output during repeated circuit sampling. For each number of output photons, the lossy outputs with that number of photons are used to construct a lossy approximation of the ideal n photon distribution. So that if there are n input photons, one can construct n-1 lossy approximations of the ideal output distribution. One for the n-1 photon outputs, one for the n-2 photon outputs, and so on. For n input photons it is possible to construct n-1 such approximate distributions. For each output state a curve can be fitted to the change in the probability with increasing number of lost photons. And in this way the lossy approximate probabilities from the lossy distributions can be used to extrapolate a mitigated probability for each output, and thereby generate a mitigated output probability distribution. This technique also works for expectation values of marginals, that is outputs that relate to a subset of the possible output modes.

In the present description, the words "data", "piece of information" and "information" can be used for the same purpose, i.e. one data can be or comprise information or a piece of information, and a piece of information can be or comprise a data.

In the present description, one module can comprise several modules, one module can be formed of several modules. For example, the quantum channel module can comprise several other modules and quantum channels.

According to an embodiment, the present invention can be configured to cooperate with at least one input module including one or more user interface devices such as a keyboard, pointer, number pad, or touch screen.

In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor executable instructions that, when executed by a processor cause the processor to control, initialize, write to, manipulate, read out, and/or otherwise send data to/from a quantum module.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", can include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

All scientific publications referred to in this description, are incorporated by reference in their entireties for all purposes herein.

While certain features of the described embodiments and implementations have been described herein, many modifications, substitutions, changes and equivalents will now occur to the skilled person in the relevant art. It is, therefore, to be understood that the appended claims are intended to cover all such modifications and changes as fall within the scope of the described embodiments and implementations.

References:

| | |
|---|---|
| 100 | Method for processing data related to lossy measured outputs |
| 110 | Running a predetermined number of times at least one experiment |
| 111 | Sending at least one input string of n photons across at least one linear optical quantum circuit |
| 112 | Measuring at least one output string of k photons at an output of said linear optical quantum circuit |
| 113 | Generating at least one probability distribution |
| 120 | Obtaining a plurality of probability distributions |
| 130 | Fitting said plurality of probability distributions using at least a first mathematical model |
| 140 | Extracting from said set of parameters at least one probability distribution |
| 200 | Computer-implemented system |
| 210 | Photon emitter module |
| 220 | Linear optical quantum circuit |
| 221 | Input |
| 222 | Linear optical circuits elements |
| 223 | Output |
| 230 | Photon detector module |
| 240 | Processing module |

**Claims**

1. A method (100) for processing data related to lossy measured outputs to mitigate the effects of photon loss in at least one linear optical quantum circuit (220), said method being configured to be executed by at least one computer-implemented system (200), said method comprising at least:

   ◦ Running (110) a predetermined number of times at least one experiment, said experiment comprising at least: .

      • Sending (111), by at least one photon emitter module (210), at least one input string of n photons across at least one linear optical quantum circuit (220);
      • Measuring (112), by at least one photon detector module (230), at least one output string of k photons at an output (223) of said linear optical quantum circuit (220), the number n-k being equal to j, j being the number of lost photons across said linear optical quantum circuit (220), each number of lost photons being configured to be used to construct at least one theoretical output distribution composed of $\binom{m-k}{n-k}$ output states, wherein m is the number of mode, n is the number of input photons and k is the number of output photons;
      • Generating (113), by at least one processing module (240), at least one probability distribution by constructing up to n-1 approximations of a theoretical output distribution based on said number of lost photons;

   ◦ Obtaining (120), by at least said processing module (240), a plurality of probability distributions from said predetermined number of experiments;

o Fitting (130), by at least said processing module (240), said plurality of probability distributions using at least a first mathematical model to generate at least one equation comprising at least one set of parameters;

∘ Extracting (140), by at least said processing module (240), from said set of parameters at least one probability distribution, said probability distribution corresponding to an experiment wherein n is equal to k.

2. The method (100) according to claim 1 wherein the step of constructing up to n-1 approximations of a theoretical output distribution comprises at least:

∘ Calculating, by at least said processing module (240), from the experimental measurements the probability $p\left(s_i^{n-k}\right)$ of obtaining the bit string $s_i^{n-k}$ using the addition rule of probabilities as follow:

$$p\left(s_i^{n-k}\right) = \sum_{s_j^n \in \mathcal{G}(s_i^{n-k})} p\left(s_j^n\right) \frac{1}{\binom{n}{k}}$$

where each element of the sum is composed of the probability $p\left(s_j^n\right)$ that the boson sampling outputs the ideal bit string $s_j^n$, multiplied by the probability $\frac{1}{\binom{n}{k}}$ of losing k photons from $s_j^n$ to end up with $s_i^{n-k}$

∘ Constructing, by at least said processing module (240), the probability distribution $p_{R,n-k}(s_l^n)$

$$p_{R,n-k}(s_l^n) := \sum_{s_i^{n-k} \in \mathcal{L}(s_l^n)} p\left(s_i^{n-k}\right) = p(s_l^n) + \sum_{s_i^{n-k} \in \mathcal{L}(s_l^n)} \sum_{s_j^n \in \mathcal{G}(s_i^{n-k}), j \neq l} p\left(s_j^n\right) \frac{1}{\binom{n}{k}}$$

∘ Normalizing, by at least said processing module (240), the probability distribution $p_R(s_l^n)$ using $\sum_i p\left(s_i^{n-k}\right) = 1$.

$$\sum_l p_{R,n-k}(s_l^n) = \sum_l \sum_{s_i^{n-k} \in \mathcal{L}(s_l^n)} p\left(s_i^{n-k}\right) = \binom{m-n+k}{k}$$

∘ Obtaining, by at least said processing module (240), the normalized probability $p_{R,n-k}(s_l^n)$:

$$p_{R,n-k}(s_l^n) = \frac{p(s_l^n)}{\binom{m-n+k}{k}} + \sum_{s_i^{n-k} \in \mathcal{L}(s_l^n)} \sum_{s_j^n \in \mathcal{G}(s_i^{n-k}), j \neq l} p\left(s_j^n\right) \frac{1}{\binom{m-n+k}{k_k^n}}$$

∘ Extracting, by at least said processing module (240), at least one interference term $I_{s_l^n,k}$ from said probability:

$$I_{s_l^n,k} = \sum_{s_i^{n-k} \in \mathcal{L}(s_l^n)} \sum_{s_j^n \in \mathcal{G}(s_i^{n-k}), j \neq l} p\left(s_j^n\right) \frac{1}{\binom{m-n+k}{k_k^n}}$$

Where, when k increases, said interference term $I_{s_l^n,k}$ approaches the uniform probability $p_{unif} := \frac{1}{\binom{m}{n}}$.

3. The method (100) according to the previous claim wherein said first mathematical model is a linear solving mathematical model configured to generate at least one equation comprising at least said set of parameters, and to extract from said set of parameters at least one probability distribution.

4. The method (100) according to the previous claim wherein said inference term $I_{s_l^n,k}$ is replaced by its average over all possible linear optical circuits such as:

$$I_{s_l^n,k} = \frac{N_k'}{N_k} \frac{1}{\binom{m}{n}}.$$

where $N_k := \binom{m-n+k}{k}\binom{n}{k}$ and $N_k' := N_k - \binom{n}{k}$

5. The method (100) according to the previous claim wherein the normalized probability $p_{R,n-k}(s_l^n)$ is computed from the experimental statistics of n-k photons to obtain said ideal probability from the following:

$$p(s_l^n) = \left| \binom{m-n+k}{k} \left( p_{R,n-k}(s_l^n) - \frac{N_k'}{N_k}\frac{1}{\binom{m}{n}} \right) \right|$$

6. The method (100) according to any of the two previous claims wherein a dependency term $d_k$ is added to the interference term, said dependency term is configured to qualify the average correlation of the inference terms with their respective ideal probabilities within a probability distribution, and wherein said dependency term is as follow:

$$d_k = \frac{1}{\binom{m-n+k}{k} - 1} \left( \frac{\binom{m-n+k}{k}D_k}{D_0} - \frac{1}{\binom{m-n+k}{k}} \right)$$

And wherein, the interference term is as follow:

$$I_{s_l^n,k} = \frac{N_k'}{N_k}\left( (1-d_k)p_{\text{unif}} + d_k p(s_l^n) \right)$$

Where $p_{unif}$ is the uniform probability such as $p_{\text{unif}} = \frac{1}{\binom{m}{n}}$, and $d_k$ is the dependency term, k is the number of lost photons for the output, $N_k := \binom{m-n+k}{k}\binom{n}{k}$, and $N_k' := N_k - \binom{n}{k}$.

7. The method (100) according to claim 2 wherein said first mathematical model is a curve fitting model configured to generate at least one equation comprising at least said set of parameters, and to extract from said set of parameters at least one probability distribution.

8. The method (100) according to the previous claim wherein said curve fitting model is a linear curve fitting model using the following linear model function:

$$f_{p_{R,n-k}(s_l^n,k)} := g_{avg}k + \alpha_{s_l^n,n}$$

Wherein $f_{p_{R,n-k}(s_l^n,k)}$ refers to the linear model function, $g_{avg}$ is the gradient parameter, k is the number of lost photons for the output, and $\alpha_{s_l^n,n}$ is a numerical value associated with the model function.

9. The method (100) according to the previous claim wherein said curve fitting model is an exponential curve fitting model using the following exponential model function:

$$f_{p_{R,n-k}(s_l^n,k)} := \alpha_{s_l^n,n}e^{-g_{avg}k} + p_{unif}$$

Wherein $p_{unif}$ is the uniform probability such as $p_{\text{unif}} = \frac{1}{\binom{m}{n}}$, and $f_{p_{R,n-k}(s_l^n,k)}$ refers to the exponential model function, $g_{avg}$ is the gradient parameter, k is the number of lost photons for the output, and $\alpha_{s_l^n,n}$ is a numerical value associated with the model function.

10. The method (100) according to any of the previous claims wherein at least one photon of the string of photons is measured using at least one number resolving detector of the photon detector module (230).

11. The method (100) according to any of the previous claims wherein at least one photon of the string of photons is measured using at least one threshold detector of the photon detector module (230).

12. A computer product program for processing data related to lossy measured outputs to mitigate the effects of photon loss in at least one linear optical quantum circuit (220) which, when executed by at least one computer-implemented system (200), executes the method (100) according to any of the previous claims.

13. A non-volatile memory comprising at least one computer program product according to the previous claim.

14. A computer-implemented system (200) for processing data related to lossy measured outputs to mitigate the effects of photon loss in at least one linear optical quantum circuit (220), said computer-implemented system (200) comprising at least:

o A photon emitter module (210) comprising at least one single photon source configured to generate and send a plurality of strings of photons; Preferably a string of photon comprises a plurality of photons emitted one after another; Advantageously, each photon of a string of photons comprises a mode m;
◦ Said linear optical quantum circuit (220) configured to implement at least one unitary transformation on a given number of modes;
o A photon detector module (230) configured to measure at least one photon coming out from said linear optical quantum circuit;
◦ A processing module (240) comprising at least one processing unit configured to implement said method.

15. The computer-implemented system (200) according to the previous claim wherein said linear optical quantum circuit comprises at least:

a. One input (221) configured to receive at least one string of photons, preferably from said photon emitter module;
b. Linear optical circuits elements (222) configured to implement at least one unitary transformation on a given number of modes on at least one photon of said string of photons;
c. One output (223) configured to collaborate with at least said photon detector module to measure at least one photon coming out.

100

110

111

112

113

120

130

140

Fig. 1

Fig. 2

Number of lost photons

Probability

$P_n(s_0)$

$P_{n-1}(s_0)$

$P_{n-2}(s_0)$

$P_{n-3}(s_0)$

Fig. 3

Fig. 4

Europäisches
Patentamt

European
Patent Office

Office européen
des brevets

# EUROPEAN SEARCH REPORT

**Application Number**

EP 24 31 5015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BENOIT SERON ET AL: "Efficient validation of Boson Sampling from binned photon-number distributions", ARXIV.ORG, CORNELL UNIVERSITY LIBRARY, 201 OLIN LIBRARY CORNELL UNIVERSITY ITHACA, NY 14853, 19 December 2022 (2022-12-19), XP091398094, * page 1 - page 17, right-hand column, paragraph 6 * * Appendices A-C * | 1-15 | INV. G06N10/40 ADD. G06N10/70 |
| A | Yang Tian-Yu ET AL: "Post-selection in noisy Gaussian boson sampling: part is better than whole", arXiv (Cornell University), 20 December 2022 (2022-12-20), XP093179991, DOI: 10.48550/arxiv.2205.02586 Retrieved from the Internet: URL:https://arxiv.org/pdf/2205.02586 [retrieved on 2024-07-03] * page 1 - page 12, right-hand column, paragraph 2 * * Appendices A and B * | 1-15 | |
| A | Su Daiqin ET AL: "Error mitigation on a near-term quantum photonic device", arXiv.org, 1 May 2021 (2021-05-01), XP093179978, DOI: 10.48550/arxiv.2008.06670 Retrieved from the Internet: URL:https://arxiv.org/pdf/2008.06670v4 [retrieved on 2024-07-03] * page 1 - page 15, left-hand column, paragraph 1 * * Appendices A-C * | 1-15 | TECHNICAL FIELDS SEARCHED (IPC) G06N |

-/--

The present search report has been drawn up for all claims

| Place of search | Date of completion of the search | Examiner |
|---|---|---|
| The Hague | 3 July 2024 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

**EUROPEAN SEARCH REPORT**

Application Number

EP 24 31 5015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GB 2 612 332 A (ORCA COMPUTING LTD [GB]) 3 May 2023 (2023-05-03) * abstract; claims 1-19; figures 1-8 * * paragraph [0005] - paragraph [0141] * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 3 July 2024 | Volkmer, Markus |

EPO FORM 1503 03.82 (P04C01)

**ANNEX TO THE EUROPEAN SEARCH REPORT
ON EUROPEAN PATENT APPLICATION NO.**

EP 24 31 5015

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2024

| Patent document cited in search report | | Publication date | Patent family member(s) | Publication date |
|---|---|---|---|---|
| GB 2612332 | A | 03-05-2023 | GB 2612332 A | 03-05-2023 |
| | | | GB 2612379 A | 03-05-2023 |
| | | | US 2023133597 A1 | 04-05-2023 |
| | | | US 2023140189 A1 | 04-05-2023 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KNILL E** ; **LAFLAMME R** ; **MILBURN GJ.** A scheme for efficient quantum computation with linear optics.. *nature*, 04 January 2001, vol. 409 (6816), 46-52
- **AARONSON S** ; **ARKHIPOV A**. The computational complexity of linear optics.. *Proceedings of the forty-third annual ACM symposium on Theory of computing*, 06 June 2011, 333-342
- Roffe J. Quantum error correction: an introductory guide.. *Contemporary Physics.*, 03 July 2019, vol. 60 (3), 226-45
- **AARONSON S** ; **ARKHIPOV A.** The computational complexity of linear optics.. *InProceedings of the forty-third annual ACM symposium on Theory of computing*, 06 June 2011, 333-342

- **OSZMANIEC M** ; **BROD DJ.** Classical simulation of photonic linear optics with lost particles. *New Journal of Physics.*, 19 September 2018, vol. 20 (9), 092002
- **NEZAMI S.** Permanent of random matrices from representation theory: moments, numerics, concentration, and comments on hardness of boson-sampling. *arXiv*, 13 April 2021
- **HANSEN PC** ; **PEREYRA V** ; **SCHERER G.** Least squares data fitting with applications.. JHU Press, 15 January 2013